# EUROPEAN PATENT APPLICATION

(11) **EP 4 549 509 A1**
(43) Date of publication of application: **07.05.2025**
(21) Application number: 23831469.4
(22) Date of filing: 27.06.2023
(51) Int. Cl.: C08L 21/00, B60C 1/00, C08F 236/04, C08K 5/20, C08K 7/02, C08L 9/00, C08L 47/00

(54) **VULCANIZED RUBBER COMPOSITION FOR TIRES AND TIRE**

(30) Priority: 01.07.2022 JP 2022107378
(71) Applicant: BRIDGESTONE CORPORATION, Chuo-ku Tokyo 104-8340 (JP)
(72) Inventor: OGIWARA, Akiko, Tokyo 104-8340 (JP); HANZAWA, Kentaro, Tokyo 104-8340 (JP); YUKIMURA, Noriaki, Tokyo 104-8340 (JP); YOSHIHARA, Taiga, Tokyo 104-8340 (JP)
(74) Representative: Marks & Clerk LLP
(86) International application number: PCT/JP2023/023858
(87) International publication number: WO 2024/005029

(57) **Abstract**

A vulcanized rubber composition for tires with excellent on-ice performance is provided. To solve the above issue, the present disclosure provides a vulcanized rubber composition for tires being a vulcanized product of a rubber composition including a rubber component that contains a modified conjugated diene-based polymer having a (meth)acrylic acid ester in the molecule thereof. The vulcanized rubber composition for tires has a plurality of spaces.

## Description

### TECHNICAL FIELD

The present disclosure relates to a vulcanized rubber composition for tires and a tire.

### BACKGROUND

When a tire is driven on an icy or snowy road surface, the tire may slip due to the water film formed between the road surface and the tire, which reduces braking performance. Therefore, there is a demand for improved on-ice performance of studless tires, such as effective grip on icy roads, making it easier to brake the vehicle.

As a method to enhance on-ice performance, it is known to increase the surface roughness (surface unevenness) of the tread rubber or to improve flexibility (softness and adhesiveness) at low temperatures.

Increasing the surface roughness of tread rubber is considered to be effective because the depressed portions absorb the water film on the ice, and the protruding portions contact the ice surface, thereby increasing the contact area with the ice surface compared to tread rubber with a smooth surface.

Here, as a method to increase the surface roughness of tread rubber, it is common to incorporate foaming agents or thermally expandable microcapsules into rubber composition (for example, see PTL 1).

### CITATION LIST

### Patent Literature

PTL 1: JP 2020-19862 A

### SUMMARY

### (Technical Problem)

In the method exemplified in PTL 1, however, while increasing the surface roughness allows the absorption of more water film, the area that can contact the ice surface decreases. Therefore, it can be said that there is a limit to the effect of improving the on-ice performance by increasing surface roughness.

Accordingly, it could be helpful to provide a vulcanized rubber composition for tires with excellent on-ice performance. It could also be helpful to provide a tire with excellent on-ice performance.

### (Solution to Problem)

The present inventors have conducted extensive research to further improve the on-ice performance. We have then discovered that significant improvements in on-ice performance can be achieved by forming a plurality of spaces, in addition to incorporating a modified conjugated diene-based polymer having a (meth)acrylic acid ester in the molecular thereof, in a vulcanized rubber composition for tires

Specifically, the vulcanized rubber composition for tires of the present disclosure is a vulcanized product of a rubber composition comprising a rubber component that contains a modified conjugated diene-based polymer having a (meth)acrylic acid ester in a molecule thereof, and
the vulcanized rubber composition for tires comprises a plurality of spaces.

With this structure, an excellent on-ice performance can be achieved.

Furthermore, a tire of the present disclosure includes the aforementioned vulcanized rubber composition for tires used in a tread portion.

With this structure, an excellent on-ice performance can be achieved.

### (Advantageous Effect)

According to the present disclosure, a vulcanized rubber composition for tires with excellent on-ice performance can be provided. In addition, according to the present disclosure, a tire with excellent on-ice performance can be provided.

### BRIEF DESCRIPTION OF THE DRAWINGS

In the accompanying drawings:
FIG. 1 is a diagram schematically illustrating a plurality of spaces present in a vulcanized rubber composition for tires according to one embodiment of the present disclosure; and
FIG. 2 is a diagram schematically illustrating cross-sections of spaces present in the vulcanized rubber composition for tires according to one embodiment of the present disclosure.

### DETAILED DESCRIPTION

Hereinafter, an embodiment of the present disclosure will be described with reference to the drawings as necessary.

### <Vulcanized rubber composition for tires>

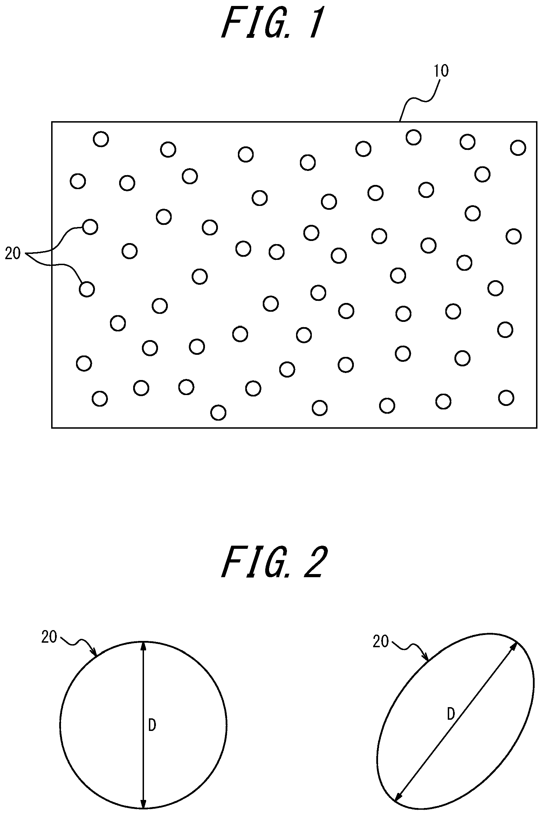

The vulcanized rubber composition for tires of the present disclosure is a vulcanized rubber composition for tires being a vulcanized product of a rubber composition including rubber component that contains a modified conjugated diene-based polymer having a (meth)acrylic acid ester in the molecular thereof. As illustrated in FIG. 1, the vulcanized rubber composition for tires 10 has a plurality of spaces 20.

In the vulcanized rubber composition for tires of the present disclosure, significant improvements in on-ice performance can be achieved by having a plurality of spaces 20, in addition to incorporating a modified conjugated diene-based polymer having a (meth)acrylic acid ester, which will be described later, in the rubber composition, as illustrated in FIG. 1.

Here, the spaces in the vulcanized rubber composition for tires of the present disclosure refer to pores formed in multiple numbers with an average diameter of about 1 to 500 µm in the vulcanized rubber composition for tires. Furthermore, as illustrated in FIG. 2, the diameter of the spaces refers to the maximum diameter D of a space 20 (in cases where the space is not spherical, it refers to the maximum distance D between any two points on the inner wall of the space).

The average diameter of the spaces refers to the average value of the diameters D of the spaces 20 present in the vulcanized rubber composition for tires of the present disclosure. In the present disclosure, a cross-section of the vulcanized rubber composition for tires is observed with a digital microscope ("VHX-100", manufactured by Keyence Corporation), and the average diameter of all the spaces present in one field of view (2.5 mm × 2.5 mm) is used as the average diameter of the spaces. In the vulcanized rubber composition for tires of the present disclosure, since the shape and size of the spaces do not vary greatly within a single vulcanized rubber composition for tires, the average diameter of the spaces in one field of view can be used as the average diameter of the spaces.

Moreover, the porosity of the vulcanized rubber composition for tires of the present disclosure is preferably 5 to 45%. By setting the lower limit of the porosity to 5%, the on-ice performance can be improved more reliably. From a similar viewpoint, the porosity is preferably 7% or more, more preferably 15% or more. On the other hand, by setting the upper limit of the porosity to 45%, even when there are multiple spaces, a reduction in wear resistance performance can be suppressed more reliably. From a similar viewpoint, the porosity is preferably 40% or less, more preferably 37% or less.

The porosity refers to the volume ratio (volume %) of the spaces in the vulcanized rubber composition for tires of the present disclosure. The method for measuring the porosity is not particularly limited and can be measured using a specific gravity meter (ViBRA specific gravity meter "DMA-220", manufactured by Shinko Denshi Co., Ltd.) or the like, for example.

Although the vulcanized rubber composition for tires of the present disclosure has a plurality of spaces, the method for introducing these spaces is not particularly limited. The spaces can be formed using known techniques depending on the conditions of the spaces and the equipment used to produce the vulcanized rubber composition for tires.

For example, as will be described later, a method of introducing spaces into the vulcanized rubber composition for tires by blending a foaming agent, foaming aid, or composite fibers into the rubber composition before vulcanization can be mentioned. Additionally, the porosity can be controlled by adjusting the vulcanization conditions or by varying the amount of space-inducing agents such as a foaming agent or composite fibers.

Note that the vulcanized rubber composition for tires refers to a vulcanized rubber obtained by vulcanizing an unvulcanized rubber composition. Furthermore, the vulcanization conditions (temperature and time) are not particularly limited and can be adjusted according to the required performances.

The following describes the unvulcanized rubber composition from which the vulcanized rubber composition for tires of the present disclosure is obtained (hereinafter simply referred to as "rubber composition").

The rubber composition includes a rubber component that contains a modified conjugated diene-based polymer having a (meth)acrylic acid ester in the molecular thereof.

### (Rubber Component)

The rubber component contained in the rubber composition needs to contain a modified conjugated diene-based polymer having a (meth)acrylic acid ester in the molecular thereof (hereinafter referred to as "(meth)acrylic acid ester-modified polymer").

Since the (meth)acrylic acid ester is hydrophilic, the usage of a polymer incorporating the (meth)acrylic acid ester in the molecular thereof as the rubber component can hydrophilize the rubber surface, thereby significantly improving on-ice performance. Additionally, since the (meth)acrylic acid ester-modified polymer contains (meth)acrylic acid ester moieties in the molecular thereof, a decline in performances such as wear resistance performance can be suppressed compared to the case where a hydrophilic material such as a resin is added to the rubber composition.

The term "(meth)acrylic acid ester" refers to acrylic acid ester and/or methacrylic acid ester. The expression "having a (meth)acrylic acid ester in the molecular thereof" means that the (meth)acrylic acid ester is incorporated within the molecule as a functional group (such as an acryloyl or methacryloyl group), and mixtures are not included. In particular, the (meth)acrylic acid ester is preferably a (meth)acrylic acid alkoxyalkyl ester.

The (meth)acrylic acid ester-modified polymer can be any polymer having a (meth)acrylic acid ester in the molecular thereof, and is not particularly limited. However, it is preferable that the content of the (meth)acrylic acid ester in the (meth)acrylic acid ester-modified polymer ranges from 0.5 to 10 mol%. A content of the (meth)acrylic acid ester of 1 mol% or more in the (meth)acrylic acid-modified polymer ensures sufficient hydrophilicity, leading to further excellent on-ice performance. A content of the (meth)acrylic acid ester of 10 mol% or less in the (meth)acrylic acid ester-modified polymer helps prevent a decline in performances such as wear resistance performance.

From a similar viewpoint, the content of the (meth)acrylic acid ester in the (meth)acrylic acid ester-modified polymer is preferably 2 to 7 mol%, more preferably 3 to 6 mol%.

The content of the (meth)acrylic acid ester in the (meth)acrylic acid-modified polymer can be measured using NMR.

Furthermore, the glass transition temperature of the (meth)acrylic acid-modified polymer is preferably -100 to -50 °C, and more preferably -90 to -70 °C, in view of achieving further excellent on-ice performance.

The glass transition temperature of the (meth)acrylic acid-modified polymer can be measured in accordance with JIS K 7121-1987 using a differential scanning calorimeter (DSC), such as "DSCQ2000" manufactured by TA Instruments Japan, for example.

The conjugated diene-based polymer constituting the (meth)acrylic acid ester-modified polymer is not particularly limited, but is preferably a homopolymer of a conjugated diene unit or a copolymer having an aromatic vinyl unit and a conjugated diene unit.

Examples of the conjugated diene compound as a monomer include 1,3-butadiene, isoprene, 1,3-pentadiene, 2,3-dimethylbutadiene, 2-phenyl-1,3-butadiene, 1,3-hexadiene, and the like, with 1,3-butadiene and isoprene being preferred. On the other hand, examples of the aromatic vinyl compound as a monomer include styrene, p-methylstyrene, m-methylstyrene, p-tert-butylstyrene, α-methylstyrene, chloromethylstyrene, vinyltoluene, and the like.

Additionally, the conjugated diene-based polymer constituting the (meth)acrylic acid ester-modified polymer has a vinyl bound content in the 1,3-butadiene unit of preferably 10 to 20 mol%, more preferably 13 to 18 mol%. By setting the vinyl bound content in the 1,3-butadiene unit to less than 18 mass%, it is possible to suppress an increase in the hardness of the rubber and a decline in on-ice performance. By setting the vinyl bound content in the 1,3-butadiene unit to 13% or more, the strength of the (meth)acrylic acid-modified polymer can be enhanced.

The method for producing the diene-based polymer rubber of the present disclosure is not particularly limited but the diene-based polymer rubber can be produced by copolymerizing a diene monomer and a (meth)acrylic acid ester monomer. The polymerization method is not limited and any known methods such as emulsion polymerization or solution polymerization can be used, with emulsion polymerization being preferred in view of industrial productivity. In other words, a preferred method is to polymerize a monomer mixture containing a diene monomer and a (meth)acrylic acid ester monomer in an aqueous medium in the presence of an emulsifier. For emulsion polymerization, a polymerization initiator and a molecular weight regulator can be used in addition to an emulsifier, and other commonly used polymerization auxiliary agents can also be used.

The emulsifier is not particularly limited, but carboxylic acid-based emulsifiers can be preferably used. Examples of carboxylic acid-based emulsifiers include fatty acid soaps and rosin acid soaps. As fatty acid soaps, sodium or potassium salts of long-chain aliphatic carboxylic acids having 12 to 18 carbon atoms, such as lauric acid, myristic acid, palmitic acid, stearic acid, oleic acid, or mixtures of there, can be used. Furthermore, examples of rosin acid soaps include sodium or potassium salts of natural rosins, such as gum rosin, wood rosin, or tall oil rosin that have been disproportionated or hydrogenated. Examples of natural rosins includes natural rosins containing abietic acid, levopimaric acid, palustric acid, dehydroabietic acid, tetrahydroabietic acid, and neoabietic acid as the main ingredient. The amount of emulsifier used is preferably 0.05 to 10 parts by weight, more preferably 0.5 to 5 parts by weight, per 100 parts by weight of the monomers used in polymerization.

The polymerization initiator is not particularly limited, and any radical initiator may be used. Examples include inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, t-butyl cumyl peroxide, acetyl peroxide, isobutyryl peroxide, octanoyl peroxide, dibenzoyl peroxide, 3,5,5-trimethylhexanoyl peroxide, t-butyl peroxyisobutyrate, and diisopropylbenzene hydroperoxide; and azo compounds such as azobisisobutyronitrile, azobis-2,4-dimethylvaleronitrile, azobiscyclohexanecarbonitrile, and methyl azobisisobutyrate. These polymerization initiators can be used alone or in combination of two or more. As the polymerization initiator, inorganic or organic peroxides are preferably used. When a peroxide is used as the polymerization initiator, it can be used in combination with a reducing agent in the form of a redox-type polymerization initiator. Examples of reducing agents include, but are not particularly limited to, compounds containing metal ions in a reduced state, such as ferrous sulfate or copper naphthenate; sulfinate salts such as sodium hydroxymethanesulfinate; and sulfites such as sodium sulfite, potassium sulfite, sodium bisulfite, aldehyde sodium bisulfite, and potassium bisulfite. The amount of polymerization initiator added is preferably 0.01 to 2 parts by weight per 100 parts by weight of the monomers used in polymerization.

Examples of molecular weight regulators include, but are not particularly limited to, α-methylstyrene dimer; mercaptans such as t-dodecyl mercaptan, n-dodecyl mercaptan, and octyl mercaptan; halogenated hydrocarbons such as carbon tetrachloride, methylene chloride, and methylene bromide; sulfur-containing compounds such as tetraethylthiuram disulfide, dipentamethylenethiuram disulfide, and diisopropyl xanthogen disulfide. Among these, mercaptans are preferred, and t-dodecyl mercaptan is more preferred. These molecular weight regulators may be used alone or in combination of two or more. The amount of molecular weight regulator used varies depending on the type thereof but is preferably 0.1 to 1.5 parts by weight, more preferably 0.2 to 1.0 parts by weight, per 100 parts by weight of the monomers used in polymerization.

As the medium used in emulsion polymerization, aqueous media such as water are typically used. The amount of aqueous medium is preferably 80 to 500 parts by weight, more preferably 80 to 300 parts by weight, per 100 parts by weight of the monomers used in polymerization.

For emulsion polymerization, other auxiliary polymerization agents such as stabilizers, dispersants, pH adjusters, deoxidizers, and particle size adjusters may be used as needed. When such agents are used, there are no specific limitations on the types or amounts.

Examples of the method of adding the monomers include the methods of adding all the monomers to the reaction vessel at once, adding the monomers continuously or intermittently as the polymerization progresses, or adding a portion of the monomers to react them until a certain conversion rate is reached, and then adding the remaining monomers continuously or intermittently to polymerize them. Any of these methods may be adopted. When the monomers are added continuously or intermittently, the composition of the mixture may be kept constant or varied. Furthermore, the monomers may be mixed in advance before charging them to the reaction vessel or each monomer may be added separately.

The polymerization temperature during emulsion polymerization is not particularly limited, but is typically from 0 to 95 °C, preferably from 5 to 70 °C. The polymerization time is not particularly limited but is typically about 5 to 40 hours.

The polymerization terminators are not particularly limited, and any polymerization terminators commonly used in emulsion polymerization may be employed. Specifically, examples include hydroxylamine compounds such as hydroxylamine, hydroxylamine sulfate, diethylhydroxylamine, hydroxylamine sulfonate and alkali metal salts thereof; sodium dimethyldithiocarbamate; hydroquinone derivatives; catechol derivatives; and aromatic hydroxydithiocarboxylic acid compounds such as hydroxydimethylbenzenethiocarboxylic acid, hydroxydiethylbenzenedithiocarboxylic acid, and hydroxydibutylbenzenedithiocarboxylic acid, and alkali metal salts thereof. The amount of polymerization terminator used is not particularly limited, but is typically 0.05 to 2 parts by weight per 100 parts by weight of the monomers used in polymerization.

The copolymer of latex obtained from the emulsion polymerization may be coagulated using a salt or alcohol, filtered, and dried after adding an age resistor, such as phenol-based, phosphorus-based, or sulfur-based stabilizer, if required, thereby obtaining the diene-based polymer rubber of the present disclosure. The coagulation, filtration, and drying steps subsequent to coagulation can be each carried out using known methods. The content of the age resistor is preferably 0.05 to 2 parts by weight per 100 parts by weight of the diene-based polymer rubber or per 100 parts by weight of the monomers used in polymerization.

In addition to the (meth)acrylic acid ester-modified polymer, the rubber component may contain any rubber.

For example, from the viewpoint of obtaining excellent cut resistance and wear resistance performance, it is preferable that the rubber component includes diene-based rubber.

Examples of the diene-based rubber include, for example, natural rubber, synthetic polyisoprene rubber (IR), styrene-butadiene copolymer rubber (SBR), and polybutadiene rubber (BR). One of these diene-based synthetic rubbers may be used, or a blend of two or more of these diene-based synthetic rubbers may be used in the rubber component. The rubber component may also contain non-diene-based synthetic rubber depending on the required performance.

Among the diene-based rubbers mentioned above, it is preferable that the rubber component contains natural rubber, and butadiene rubber or styrene-butadiene rubber.

The addition of these rubbers helps to maintain good cut resistance and wear resistance performance while enhancing on-ice performance.

The butadiene rubber and styrene-butadiene rubber do not include the (meth)acrylic acid ester-modified polymer described above.

The content ratio of the modified conjugated diene-based polymer in the rubber component is not particularly limited, but is preferably 5 to 50 mass%, more preferably 10 to 45 mass%.

A content ratio of 5 mass% or more of the modified conjugated diene-based polymer in the rubber component enhances on-ice performance more reliably, while a content ratio of 50 mass% or less helps to prevent a decline in performances such as wear resistance performance.

Furthermore, the content of natural rubber in the rubber component is not particularly limited, but the content of natural rubber is preferably 30 mass% or more of the rubber component, in view of further enhancing wear resistance performance and on-ice performance. By using a rubber component containing a certain amount of natural rubber together with the fatty acid amide, described later, etc, it is possible to more reliably improve the on-ice performance of a vulcanized rubber composition for tires. From a similar viewpoint, the content of natural rubber in the rubber component is preferably 35 mass% or more, more preferably 40 mass% or more. The upper limit is preferably 90 mass% or less, more preferably 80 mass% or less.

Moreover, the content of butadiene rubber or styrene-butadiene rubber in the rubber component is not particularly limited, but is preferably 15 to 45 mass%, more preferably 20 to 40 mass%, from the viewpoint of further enhancing wear resistance performance and on-ice performance.

### (Fatty Acid Amide)

The vulcanized rubber composition for tires of the present disclosure preferably contains a fatty acid amide in the rubber composition.

Since the fatty acid amide promotes provision of the hydrophilicity to the rubber surface and improves viscous resistance, the on-ice performance of the vulcanized rubber composition for tires can be further improved.

Here, the content of the fatty acid amide is preferably 0.1 to 10 parts by mass per 100 parts by mass of the rubber component. When the content of the fatty acid amide is 0.1 parts by mass or more per 100 parts by mass of the rubber component, sufficient effect of improving on-ice performance can be obtained. On the other hand, when the content of the fatty acid amide is 10 parts by mass or less per 100 parts by mass of the rubber component, the reduction in performance such as wear resistance performance and reinforcing characteristic of the rubber composition can be suppressed.

From a similar viewpoint, the content of the fatty acid amide is preferably 0.1 to 8 parts by mass, more preferably 0.3 to 5 parts by mass per 100 parts by mass of the rubber component.

Here, the type of fatty acid amide is not particularly limited as long as it can promote the provision of the hydrophilicity of the rubber surface. Examples include caproic acid amide, lauric acid amide, myristic acid amide, palmitic acid amide, stearic acid amide, oleic acid amide, erucic acid amide, methylenebisstearyl amide, ethylenebisstearyl amide, and the like.

Furthermore, from the viewpoint of achieving more excellent on-ice performance, it is preferable that the fatty acid amide is a fatty acid bisamide, and more preferably an ethylenebis fatty acid amide.

Here, examples of the ethylenebis fatty acid amide include ethylenebis stearamide and ethylenebis oleamide.

### (Liquid Polymer)

The rubber composition preferably includes a liquid polymer having a bound styrene content of less than 10% and a vinyl bound content in the conjugated diene units of 20% or more, in addition to the rubber component and fatty acid amide described above.

By containing the liquid polymer, the rubber composition as a whole can ensure flexibility, and when used together with the cyclic polyol compound and filler described later, it is possible to achieve both on-ice performance and wear resistance performance at a high level.

Moreover, from the viewpoint of achieving better on-ice performance, it is preferable that the vinyl bond content in the conjugated diene compound moiety of the liquid polymer is 30% or more, more preferably 40% or more, and more preferably 45% or more. From the viewpoint of suppressing the increase in hardness of rubber, the vinyl bond content in the conjugated diene compound moiety of the liquid polymer is preferably 70% or less, more preferably 65% or less, and even more preferably 55% or less.

Here, the liquid polymer may be any liquid polymer having a bound styrene content of less than 10% and a vinyl bound content in the conjugated diene units of 20% or more, but it is preferably an unmodified conjugated diene-based polymer. In this case, the liquid polymer is more likely to be unevenly distributed in the natural rubber phase of the rubber component, resulting in even better on-ice performance.

When the liquid polymer is an unmodified conjugated diene-based polymer, if the bound styrene content in the conjugated diene compound moiety is less than 10%, the flexibility of the rubber composition can be sufficiently ensured, and the on-ice performance of the vulcanized rubber and the tire with a tread portion obtained from the rubber composition can be further enhanced.

From a similar viewpoint, the bound styrene content in the conjugated diene compound moiety of the liquid polymer is preferably 5% or less, more preferably 3% or less, and particularly preferably 0%.

The liquid polymer preferably has a low molecular weight so that it does not form a crosslinked structure with the rubber component after the rubber composition is vulcanized. Specifically, the polystyrene-equivalent weight average molecular weight measured by gel permeation chromatography (hereinafter, sometimes simply referred to as the weight average molecular weight) is preferably 5,000 or more and less than 40,000.

If the weight average molecular weight of the liquid polymer is less than 5,000, the vulcanized rubber and the tread portion of the tire obtained from the rubber composition may become excessively flexible, potentially compromising wear resistance performance. If the weight average molecular weight of the liquid polymer is 40,000 or more, flexibility is lost, and the on-ice performance of the vulcanized rubber obtained from the rubber composition and the tire with a tread portion employing the rubber composition may be compromised.

Furthermore, from a similar viewpoint, the weight average molecular weight of the liquid polymer is preferably 5,500 to 30,000, more preferably 6,000 to 25,000, and even more preferably 6,500 to 20,000.

Moreover, the content of the liquid polymer is preferably 1 to 40 parts by mass per 100 parts by mass of the rubber component. This is because it can provide flexibility to the rubber composition, improve the on-ice performance of the vulcanized rubber and the tire with a tread portion obtained from the rubber composition, and suppress the reduction in wear resistance performance.

From a similar viewpoint, the content of the liquid polymer is preferably 3 to 30 parts by mass, more preferably 5 to 25 parts by mass, and even more preferably 7 to 20 parts by mass per 100 parts by mass of the rubber component.

Furthermore, from the viewpoint of balancing on-ice performance and wear resistance performance at a high level, the mass ratio of the content of the modified conjugated diene-based polymer and the content of the liquid polymer (content of modified conjugated diene-based polymer / content of liquid polymer) is preferably 0.5 to 5. If the mass ratio is 0.5 or more, the effect of improving the on-ice performance by the modified conjugated diene-based polymer is sufficiently achieved. If the ratio is 5 or less, the effect of improving flexibility by the liquid polymer is sufficiently achieved.

Here, when the liquid polymer is an unmodified conjugated diene-based polymer, the type of the conjugated diene-based polymer is not particularly limited as long as it has a certain weight average molecular weight, a bound styrene content in the conjugated diene compound moiety below a certain value, and a certain vinyl bond content. However, a homopolymer of a conjugated diene compound or a copolymer of an aromatic vinyl compound and a conjugated diene compound is preferred.

Examples of the conjugated diene compound as a monomer include 1,3-butadiene, isoprene, 1,3-pentadiene, 2,3-dimethylbutadiene, 2-phenyl-1,3-butadiene, 1,3-hexadiene, and the like, with 1,3-butadiene and isoprene being preferred. On the other hand, examples of the aromatic vinyl compound as a monomer include styrene, p-methylstyrene, m-methylstyrene, p-tert-butylstyrene, α-methylstyrene, chloromethylstyrene, vinyltoluene, and the like.

As the liquid polymer, either or both of polybutadiene and polyisoprene are preferred, with polybutadiene being more preferred. Note that these monomers may be used alone or in combination of two or more types.

Moreover, when the liquid polymer is an aromatic vinyl compound-conjugated diene compound copolymer, it is preferable that the bound content of the aromatic vinyl compound is less than 5 mass%. By setting the bound content of the aromatic vinyl compound to less than 5 mass%, it is possible to suppress an increase in the hardness of the rubber and a decrease in on-ice performance.

### (Filler)

The rubber composition preferably further contains a filler including at least one of silica and carbon black, in addition to the above-described rubber component, and fatty acid amide and liquid polymer as preferred components.

By including a filler containing at least one of silica and carbon black together with the rubber component, it is possible to further enhance the properties such as wear resistance performance and on-ice performance of the vulcanized rubber composition for tires.

From a similar viewpoint, it is more preferable that the filler includes both the silica and the carbon black.

Here, the types of the silica include wet silica (hydrous silicate), dry silica (anhydrous silicate), calcium silicate, and aluminum silicate. Among these, wet silica is preferable. One kind of these silicas may be used alone, or two or more kinds may be used in combination.

Moreover, precipitated silica may be used as the wet silica. As used herein, the term "precipitated silica" refers to silica that is obtained by, during the early part of the production process, allowing a reaction solution to react in a relatively high temperature and in a neutral to alkaline pH range to grow silica primary particles, and then controlling the solution to an acidic side so as to cause agglomeration of the primary particles.

While the silica is not particularly limited, one with a CTAB specific surface area (specific surface area by cetyltrimethylammonium bromide adsorption) of 70 m²/g or more and 250 m²/g or less may be used. The CTAB specific surface area refers to a value measured in accordance with ASTM D3765-92. The CTAB specific surface area (m²/g) calculated from the adsorption amount of CTAB is defined as the specific surface area calculated by assuming the adsorption cross-sectional area per molecule of cetyltrimethylammonium bromide on the silica surface to be 0.35 nm².

Moreover, the BET specific surface area of the silica may be 100 m²/g or more and 250 m²/g or less. The BET specific surface area refers to the specific surface area determined by the BET method, and in this disclosure, it can be measured in accordance with ASTM D4820-93.

The content of the silica is preferably 5 to 90 parts by mass, more preferably 10 to 70 parts by mass, and even more preferably 20 to 65 parts by mass, per 100 parts by mass of the rubber component. When the content of the silica is 5 parts by mass or more per 100 parts by mass of the rubber component, the wear resistance performance and on-ice performance of the vulcanized rubber composition for tires can be further improved. By setting it to 90 parts by mass or less, a reduction in the processability or low rolling resistance of the rubber composition can be suppressed.

Furthermore, the type of carbon black is not particularly limited, and examples include carbon black of GPF, FEF, HAF, N339, IISAF, ISAF, and SAF grades. Among these, carbon black of ISAF and SAF grades are preferable from the viewpoint of improving the wear resistance performance of the rubber composition. One kind of these carbon blacks may be used alone, or two or more kinds may be used in combination.

Additionally, as the carbon black, one with a nitrogen adsorption specific surface area (N₂SA, measured in accordance with JIS K 6217-2:2001) of 20 to 250 m²/g may be used, one with a nitrogen adsorption specific surface area of 30 to 200 m²/g may be used, or one with a nitrogen adsorption specific surface area of 30 to 150 m²/g may be used.

Moreover, as the carbon black, one with a dibutyl phthalate (DBP) oil absorption (measured according to the method described in JIS K 6217-4:2001 "Method for determining DBP oil absorption") of 50 to 200 cm³/100 g may be used, or one with a dibutyl phthalate (DBP) oil absorption of 60 to 150 cm³/100 g may be used.

The content of the carbon black is not particularly limited, but it is preferably 5 to 90 parts by mass, more preferably 20 to 80 parts by mass, even more preferably 25 to 70 parts by mass, and particularly preferably 30 to 65 parts by mass, per 100 parts by mass of the rubber component. When the content of the carbon black is 5 parts by mass or more per 100 parts by mass of the rubber component, the wear resistance performance can be further improved. By setting it to 90 parts by mass or less, a reduction in low heat generation can be suppressed more reliably.

Moreover, the total content of the silica and the carbon black is preferably 50 to 90 parts by mass per 100 parts by mass of the rubber component. This is because it is possible to further enhance the properties such as wear resistance performance and on-ice performance of the vulcanized rubber composition for tires while maintaining good performances such as low heat generation and processability.

Furthermore, the mass ratio of the content of the carbon black to the content of the silica (content of carbon black/content of silica) is preferably 0.5 to 2, more preferably 0.5 to 1.5, and even more preferably 0.7 to 1.2.

When the mass ratio of the content of the carbon black to the content of the silica is 0.5 or more, more excellent wear resistance performance and reinforcing characteristic can be obtained, and when the mass ratio of the content of the carbon black to the content of the silica is 2 or less, reduction in low heat generation is prevented.

Additionally, the filler may include, in addition to the above-mentioned silica and carbon black, an inorganic compound represented by the following general formula (XX):

nM·xSiO_{y}·zH₂O ... (XX)

[in the formula, M is a metal selected from the group consisting of aluminum, magnesium, titanium, calcium, and zirconium, oxides or hydroxides of the above metals, hydrates thereof, and carbonates of the above metals; and n, x, y, and z are an integer of 1 to 5, an integer of 0 to 10, an integer of 2 to 5, and an integer of 0 to 10, respectively].

Examples of the inorganic compound of the aforementioned general formula (XX) may include: alumina (Al₂O₃) such as γ-alumina, α-alumina; hydrated alumina (Al₂O₃·H₂O) such as boehmite, diaspore; aluminum hydroxide [Al(OH)₃] such as gibbsite, bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (such as Al₂SiO₅, Al₄·3SiO₄·5H₂O), magnesium silicate (such as Mg₂SiO₄, MgSiO₃), calcium silicate (such as Ca₂SiO₄), calcium aluminum silicate (such as Al₂O₃·CaO·2SiO₂), calcium magnesium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], crystalline aluminosilicates, such as various zeoliates, which include hydrogen, alkali metal, or alkaline earth metal for correcting charge.

The inorganic compound of the general formula (XX) preferably has a mean particle diameter of 0.01 to 10 µm, more preferably 0.05 to 5 µm, from the viewpoint of balancing wear resistance performance and wet performance.

### (Space-introducing Agent)

The rubber composition preferably contains a space-inducing agent, in addition to the above-described rubber component, and fatty acid amide, filler, and liquid polymer as preferred components. When the rubber composition contains the space-introducing agent, the vulcanized rubber has spaces on the surface or inside, or on the surface and inside thereof. As a result, the tire to which this vulcanized rubber is applied has flexibility, it easily adheres to icy road surfaces, and water on the road surface is easily absorbed into the spaces on the tire surface, so that water is likely removed from the icy or snowy surfaces. Accordingly, the on-ice braking performance can be improved.

Examples of the space-introducing agent include, for example, foaming agents, sulfuric acid metal salts, thermally expandable microcapsules, porous cellulose particles, and lignin derivatives, and one or more of these may be used alone or in a mixture of two or more. Furthermore, from the viewpoint of on-ice performance, it is preferable to use the foaming agent described above.

The content of the space-introducing agent in the rubber composition is not particularly limited, but is preferably 0.1 to 20 parts by mass, more preferably 0.3 to 10 parts by mass, and even more preferably 0.5 to 5 parts by mass per 100 parts by mass of the rubber component, from the viewpoint of obtaining the desired porosity and maintaining wear resistance performance and other performances.

### - Foaming Agent

When the rubber composition contains a foaming agent as the space-introducing agent, the foaming agent generates bubbles in a vulcanized rubber during vulcanization of the rubber composition, so that the vulcanized rubber can be made into foamed rubber. Since the foam rubber has flexibility, the tire surface made of vulcanized rubber easily adheres to icy road surfaces. In addition, the bubbles also create holes (foaming holes) in the vulcanized rubber surface and tire surface, which function as water channels to drain water.
Specifically, examples of the foaming agent include azodicarbonamide (ADCA), dinitrosopentamethylenetetramine (DPT), dinitrosopentastyrenetetramine, benzene sulfonyl hydrazide derivatives, p,p'-oxybisbenzenesulfonyl hydrazide (OBSH), inorganic foaming agents, such as carbonates, e.g., ammonium carbonate, sodium carbonate, and potassium carbonate, and bicarbonates (hydrogen carbonates), e.g., ammonium bicarbonate, sodium bicarbonate, and potassium bicarbonate, and nitroso sulfonyl azo compounds, N,N'-dimethyl-N,N'-dinitrosophthalamide, toluene sulfonyl hydrazide, p-toluenesulfonyl semicarbazide, and p,p'-oxybisbenzenesulfonyl semicarbazide that generate nitrogen. Of these, azodicarbonamide (ADCA), dinitrosopentamethylenetetramine (DPT), and inorganic foaming agents are preferable in terms of production workability. One of such foaming agents may be used alone or two or more thereof may be used in combination.

In addition, the content of the foaming agent in the rubber composition is not limited, but is preferably 1 to 10 parts by mass and more preferably 2 to 8 parts by mass per 100 parts by mass of the rubber component.

The rubber composition may further include a foaming aid such as urea, zinc stearate, zinc benzenesulfinate, zinc oxide, and the like. These may be used alone or in combination of two or more. By also using the foaming aid, the foam reaction can be promoted to enhance the degree of completion of the reaction, thus suppressing unwanted degradation over time.

### - Sulfuric Acid Metal Salt

When the rubber composition contains a sulfuric acid metal salt as the space-introducing agent, the sulfuric acid metal salt protrudes from the surface of the tire obtained by vulcanizing the rubber composition and provides a claw function without the disadvantage of being abrasive. Subsequently, the gradual evacuation of the sulfuric acid metal salt from the rubber matrix creates spaces that serve as a storage volume and channels for draining the water film from the ice surface. Under these conditions, the contact between the tire surface (for example, the surface of the tread) and the ice is no longer lubricated, and the friction coefficient is thus improved. Magnesium sulfate can be cited as the sulfuric acid metal salt.

The sulfuric acid metal salt is preferably particles having sizes in the order of micrometers. Specifically, the mean grain size and the median grain size (both expressed in mass) are preferably 1 µm to 1 mm, and the median grain size is more preferably 2 µm to 800 µm.

When the mean grain size and the median grain size are 1 µm or more, the target technical effect (i.e., formation of appropriate fine roughness) is likely to be achieved. In addition, when the mean grain size and the median grain size are 1 mm or less, a decrease in the aesthetical characteristic is prevented (i.e., the appearance of particles that are too obvious on the tread surface is prevented) and the grip performance on melting ice is less likely to be impaired, especially when the rubber composition is used as a tread.

For all of these reasons, the median grain size of the sulfuric acid metal salt is preferably 2 µm to 500 µm, and more preferably 5 µm to 200 µm. This particularly preferred grain size range seems to correspond to an optimal compromise between the desired surface roughness on the one hand and good contact between the rubber composition and ice on the other.

Furthermore, for the same reasons as above, the content of the sulfuric acid metal salt in the rubber composition is preferably 5 to 40 parts by mass, more preferably 10 to 35 parts by mass, per 100 parts by mass of the rubber component.

Note that various known methods for grain size analyses and calculations of the median grain size of the microparticles (or mean diameter of the microparticles assuming that they are substantially spherical) can be applied, such as the method using laser diffraction (see, for example, the standard ISO-8130-13 or standard JIS K5600-9-3), for example.

In addition, a grain size analysis by mechanical sieving can also be easily and preferably used. The operation thereof includes sifting a defined amount of sample (e.g., 200 g) on a vibrating table for 30 minutes with sieves having various sieve diameters (e.g., 1000, 800, 630, 500, 400, ..., 100, 80, and 63 µm meshes according to a progressive ratio equal to 1.26). The particles with excess sizes left on each sieve are collected and weighed on a precision balance, and the percent of particles with excess sizes at each mesh diameter relative to the total mass of the material is estimated from the weight thereof. Finally, the median grain size (or median diameter) or mean grain size (or mean diameter) is calculated from a histogram of the grain size distribution by a known method.

### - Thermally Expandable Microcapsule

Thermally expandable microcapsules are made of a thermally expandable substance encapsulated in a shell material made of a thermoplastic resin. The shell material of the thermal expansive microcapsules can be formed from a nitrile-based polymer.

The thermal expansive substance encapsulated in the shell material of the microcapsules has the property of vaporizing or expanding by heat, and examples thereof include at least one selected from the group consisting of hydrocarbons such as isoalkanes and normal alkanes. Examples of isoalkanes include isobutane, isopentane, 2-methylpentane, 2-methylhexane, and 2,2,4-trimethylpentane. Examples of normal alkanes include n-butane, n-propane, n-hexane, n-heptane, and n-octane. These hydrocarbons may be used alone or may be used in combination with two or more. A preferred form of thermal expansive material is a hydrocarbon that is gas at room temperature dissolved in a hydrocarbon that is liquid at room temperature . By using such a mixture of hydrocarbons, sufficient expansion force can be obtained from low to high temperature regions in the vulcanization molding temperature range (150 °C to 190 °C) for unvulcanized tires.

As such thermal expansive microcapsules, for example, products having trade names of "EXPANCEL 091DU-80" or "EXPANCEL 092DU-120", etc. manufactured by Expancel, Sweden, or products having trade names of "Matsumoto Microsphere F-85D" or "Matsumoto Microsphere F-100D", etc. manufactured by Matsumoto Yushi-Seiyaku Co., Ltd. can be used.

The content of the thermally expandable microcapsules in the rubber composition is preferably 0.1 to 10 parts by mass, and more preferably 0.5 to 5 parts by mass, per 100 parts by mass of the rubber component.

### - Porous Cellulose Particles

When the rubber composition contains porous cellulose particles as the space-introducing agent, water on icy or snowy surfaces is absorbed by the porous cellulose particles when the porous cellulose particles are exposed on the surface of the tire surface that is obtained by vulcanizing the rubber composition. As a result, the water between the tire and the road surface can be removed. In addition, the presence of cellulose, which is a polysaccharide, enhances the interaction between the tire and the water on the icy or snowy surface due to a modified polyoxyalkylene glycol.

The porous cellulose particles are cellulose particles having a porous structure with a porosity of 75 to 95%, and can significantly improve on-ice performance when blended into the rubber composition. A porosity of 75% or more of the porous cellulose particles provides an excellent effect of improving the on-ice performance, while a porosity of 95% or lower enhances the strength of the particles. The porosity is more preferably 80 to 90%.

Note that the porosity of the porous cellulose particles can be determined as follows. The volume of a sample (i.e., porous cellulose particles) of a certain mass is measured with a measuring cylinder to determine the bulk specific gravity. The porosity is calculated from the following formula. Porosity [%] = {1 - (bulk specific gravity of sample [g/ml]) / (true specific gravity of sample [g/ml])} × 100 Here, the true specific gravity of cellulose is 1.5.

The particle diameter of the porous cellulose particles is not particularly limited, but from the viewpoint of wear resistance performance, those with a mean particle diameter of 1000 µm or less are preferably used. The lower limit of the mean particle diameter is not particularly limited, but is preferably 5 µm or more. The mean particle diameter is more preferably 100 to 800 µm, and even more preferably 200 to 800 µm.

Spherical particles with a ratio of the long diameter to the short diameter of 1 to 2 are preferably used as the porous cellulose particles. The use of particles with such a spherical structure improves their dispersibility into the rubber composition and contributes to improved on-ice performance and maintenance of wear resistance performance and other performance. The ratio of the long diameter to the short diameter is more preferably 1.0 to 1.5.

The mean particle diameter and the ratio of the long diameter to the short diameter of the porous cellulose particles are determined as follows. Specifically, porous cellulose particles are observed under a microscope to obtain an image(s). Using the image(s), the long diameters and the short diameters of 100 particles (if the long diameters and the short diameters are the same, the lengths in one axial direction and the lengths in an axial direction orthogonal to the one axial direction) are determined, and the average value is calculated to determine the mean particle diameter. The ratio of the long diameter to the short diameter is obtained by dividing the long diameters by the short diameters and determining the average of the resultant values.

Such porous cellulose particles are commercially available as "Viscopearl" from Rengo Co., Ltd., and are also disclosed in JP 2001-323095 A, JP 2004-115284 A, or the like. They can be suitably used.

The content of the porous cellulose particles in the rubber composition is preferably 0.3 to 20 parts by mass per 100 parts by mass of the rubber component. A content of 0.3 parts by mass or more increases the effect of improving the on-ice performance, and a content of 20 parts by mass or less prevents the hardness of the rubber from being excessively high and prevents a decrease in wear resistance performance. The content of the porous cellulose particles is more preferably 1 to 15 parts by weight, and even more preferably 3 to 15 parts by mass.

### - Lignin Derivative

When the rubber composition contains a lignin derivative as the space-introducing agent, the effect of improving the on-ice performance can be improved.

Here, a lignin sulfonic acid salt is preferably used as the lignin derivative. Examples of the lignin sulfonic acid salt include alkali metal salts, alkaline earth metal salts, ammonium salts, alcohol amine salts, and the like of lignin sulfonic acids, and at least one of these may be used. Alkali metal and/or alkaline earth metal salts of lignin sulfonic acids are preferred, such as potassium, sodium, calcium, magnesium, lithium, and barium salts, and a mixture of these salts may be used.

### (Foaming Aid)

Furthermore, when the rubber composition contains a foaming agent as the space-introducing agent, it is preferable to include a foaming aid. Examples of the foaming aid include urea, zinc stearate, zinc benzenesulfinate, and zinc oxide. These may be used alone or in combination of two or more.

By using the foaming aid, foam reaction can be promoted to enhance the degree of completion of the reaction, thus suppressing unwanted degradation over time.

Furthermore, the total content of the foaming agent and the foaming aid is preferably 1 to 30 parts by mass per 100 parts by mass of the rubber component. When the total content of the foaming agent and the foaming aid is 1 part by mass or more, the rubber composition can be sufficiently foamed during the vulcanization and the foaming ratio of vulcanized rubber can be maintained high. On the other hand, when the total content of the foaming agent and foaming aid is 30 parts by mass or less, the decrease in the foaming ratio can also be suppressed.

From the viewpoint of suppressing reduction in the foaming ratio as described above, the total content of the foaming agent and the foaming aid is preferably 3 parts by mass or more, and more preferably 5 parts by mass or more per 100 parts by mass of the rubber component. Furthermore, from the viewpoint of suppressing reduction in the foaming ratio as described above, the total content of the foaming agent and the foaming aid is preferably 25 parts by mass or less, and more preferably 20 parts by mass or less per 100 parts by mass of the rubber component.

In addition, in the rubber composition, the mass ratio of the foaming agent to the foaming aid (foaming agent:foaming aid) is preferably 1:1.1 to 1:1.3. If the mass ratio (foaming agent:foaming aid) is less than 1:1.1, the rubber composition may not sufficiently foam during vulcanization and the foaming ratio of vulcanized rubber may be reduced. On the other hand, if the mass ratio (foaming agent:foaming aid) exceeds 1:3.3, the foaming ratio may also be reduced.

From the viewpoint of suppressing reduction in the foaming ratio as described above, the mass ratio of the foaming agent to the foaming aid (foaming agent:foaming aid) is preferably 1:1.2 or more, more preferably 1:1.3 or more. Furthermore, from the viewpoint of suppressing reduction in the foaming ratio as described above, a mass ratio of the foaming agent to the foaming aid (foaming agent:foaming aid) is preferably 1:3.2 or less, more preferably 1:3.1 or less, even more preferably 1:2.9 or less, still even more preferably 1:2.7 or less, further more preferably 1:2.5 or less, and particularly preferably 1:2.3 or less.

In addition, from the viewpoint of the foaming ratio of vulcanized rubber and the on-ice performance of a tire, the content of the foaming aid is preferably in the range of 4 to 14 parts by mass, and more preferably in the range of 6 to 14 parts by mass, per 100 parts by mass of the rubber component.

### (Composite Fibers)

The rubber composition preferably further contains composite fibers in addition to the above-described rubber component, and fatty acid amide, filler, liquid polymer, space-introducing agent, and foaming aid as preferred components.

By including the composite fibers, it is possible to sufficiently ensure compatibility with water, and particularly when used in tire applications, it is possible to impart excellent water drainage and on-ice performance.

Moreover, it is preferable that the composite fibers are made of a hydrophilic resin with a coating layer formed on the surface. This is because the provision of the coating layer on the surface of the composite fibers improves the dispersibility of the composite fibers in the rubber composition.

It is preferable that the hydrophilic resin is water-insoluble. By using a water-insoluble hydrophilic resin, it is possible to suppress the dissolution of the composite fibers even when they are exposed on the surface of the product (e.g., tire).

The hydrophilic resin is not particularly limited as long as it is a resin that can exhibit compatibility with water, in other words, a resin having a hydrophilic group within the molecule. Specifically, resins containing oxygen atoms, nitrogen atoms, or sulfur atoms are preferred, such as resins containing at least one group selected from the group consisting of -OH, -C(=O)OH, -OC(=O)R (R is an alkyl group), -NH₂, -NCO, and -SH. Among these groups, -OH, -C(=O)OH, -OC(=O)R, -NH₂, and -NCO are preferred.

More specifically, example of the hydrophilic resin include ethylene-vinyl alcohol copolymer, vinyl alcohol homopolymer, poly(meth)acrylic acid resin or the ester resin thereof (hereinafter, copolymers containing structural units derived from (meth)acrylic acid and (co)polymers containing structural units derived from (meth)acrylic acid esters are collectively referred to as (meth)acrylic acid resins), polyamide resin, polyethylene glycol resin, carboxyvinyl copolymer, styrene-maleic acid copolymer, polyvinylpyrrolidone resin, vinylpyrrolidone-vinyl acetate copolymer, polyester resin, cellulose-based resin, and the like. Among these, ethylene-vinyl alcohol copolymer, vinyl alcohol homopolymer, poly(meth)acrylic acid resin, polyamide resin, aliphatic polyamide-based resin, aromatic polyamide-based resin, polyester resin, polyvinyl alcohol-based resin, cellulose-based resin, or (meth)acrylic resin is preferred, with ethylene-vinyl alcohol copolymer being more preferred.

It is preferable that the surface of the fibers made of the hydrophilic resin has an affinity with the rubber component, and it is preferable that a coating layer made of a low-melting-point resin having a melting point lower than the maximum vulcanization temperature (hereinafter, also referred to as "low-melting-point resin") is formed on it. By forming such a coating layer, it is possible to effectively retain the affinity with water inherent to the hydrophilic resin while exhibiting good affinity with the rubber component in the vicinity of the composite fibers, and to capture the hydrophilic resin that is difficult to melt during vulcanization (foaming) to promote the formation of cavities within the composite fibers. In other words, it is possible to ensure good dispersion of the composite fibers in the rubber component and sufficiently exhibit the drainage effect derived from the hydrophilic resin, as well as sufficiently exhibiting the effect of improving the on-ice performance derived from the spaces present within the composite fibers. Moreover, since the low-melting-point resin melts during vulcanization, the coating layer becomes fluid, which contributes to the adhesion between the rubber component and the composite fibers, thereby imparting good on-ice performance and wear resistance performance.

The thickness of the coating layer varies depending on the content of the hydrophilic resin and the average diameter of the composite fibers, but is preferably 0.001 to 10 µm, more preferably 0.001 to 5 µm. By forming a coating layer with a thickness within the above range, it is possible to fully exhibit the desired effects of the present disclosure. The coating layer may be formed on the entire surface of the hydrophilic resin or a part of the surface of the hydrophilic resin. Specifically, the coating layer is preferably formed to occupy at least 50% of the entire surface area of the hydrophilic resin.

Specifically, the low-melting-point resin used for the coating layer is a resin in which the polar component accounts for 50 mass% or less of the total components in the low-melting-point resin, and more preferably a polyolefin-based resin. If the resin in which the content of the polar component is within the above range relative to the total components is used, the difference of SP value with that of the rubber component becomes moderate, and the resin has a melting point moderately lower than the maximum vulcanization temperature. As a result, good affinity with the rubber component can be sufficiently ensured, and the resin easily melts during vulcanization to promote the foaming of the vulcanized rubber. Thus, it is possible to further reliably improve the dispersion of fibers made of the hydrophilic resin in the rubber composition and ensure that cavities are reliably formed inside the composite fibers.

The polyolefin-based resin may be any of branched, linear, and the like. The polyolefin-based resin may be an ionomer resin in which molecules of an ethylene-methacrylic acid copolymer are crosslinked by metal ions. Specifically, examples of the polyolefin-based resin include polyethylene, polypropylene, polybutene, polystyrene, ethylene-propylene copolymer, ethylene-methacrylic acid copolymer, ethylene-ethyl acrylate copolymer, ethylene-propylene-diene terpolymer, ethylene-vinyl acetate copolymer, and ionomer resins of these. These may be used alone or in combination of two or more kinds thereof.

Of these, the polyolefin-based resin is preferably a polyethylene-based resin, a polypropylene-based resin, a polyolefin ionomer, or a maleic anhydride modified α-polyolefin. In the case where a polyolefin ionomer or maleic anhydride modified α-polyolefin is used, the resin also adheres to hydroxyl groups of the hydrophilic resin, which contributes to improved rubber strength.

To produce composite fibers made of the hydrophilic resin with a coating layer made of the low-melting-point resin formed thereon, a method may be employed in which these resins are blended using a mixing mill and melt-spun to form undrawn yarn, and the undrawn yarn is made into fiber by heat drawing. Alternatively, the resins may be blended using two twin-screw extruders equipped with dies and then similarly made into fiber. In this case, the hydrophilic resin and the low-melting-point resin are simultaneously extruded from the two die outlets, from which undrawn yarn is formed. The amounts of the hydrophilic resin and the low-melting-point resin charged into the mixing mill or hopper may vary depending on the length and diameter of the resulting composite (fibers), but the charged amount of the low-melting-point resin is preferably 5 to 300 parts by mass, more preferably 10 to 150 parts by mass per 100 parts by mass of the hydrophilic resin. By charging these resins in the above-mentioned range, the coating layer for delivering the desired advantageous effects is effectively formed on the surface of the composite (fibers) made of the hydrophilic resin obtained as a result of the drawing process.

Moreover, the average length of the resulting composite fibers is preferably 0.1 to 500 mm, more preferably 0.1 to 7 mm, and the average diameter is preferably 0.001 to 2 mm, more preferably 0.005 to 0.5 mm. When the average length and average diameter are within the above ranges, the composite fibers are less likely to become excessively entangled with each other and are less likely to hinder good dispersibility. Furthermore, the aspect ratio is preferably 10 to 4,000, more preferably 50 to 2,000. The aspect ratio refers to the ratio of the long axis to the short axis of the composite fibers.

Moreover, the ratio of the length A in the long diameter direction in a cross-section perpendicular to the long axis direction to the length B in the short diameter direction perpendicular to the long diameter direction in the cross-section (A/B) of the resulting composite fibers is preferably greater than 1, more preferably 1.5 or more, even more preferably 1.8 or more, and particularly preferably 2.0 or more. Moreover, the ratio A/B is preferably 20 or less, more preferably 15 or less, and particularly more preferably 10 or less. When the ratio is within the above range, the on-ice performance is further improved. The cross-sectional shape is not particularly limited as long as A/B is greater than 1 and may have any shape such as elliptical, rectangular, polygonal, or irregular shape.

Moreover, the content of the composite fibers made of the hydrophilic resin with a coating layer formed thereon is preferably 0.1 to 100 parts by mass, more preferably 0.3 to 30 parts by mass, even more preferably 0.5 to 10 parts by mass, and still even more preferably 1 to 6 parts by mass per 100 parts by mass of the rubber component. If the content of the composite fibers made of the hydrophilic resin with a coating layer formed thereon is within the above range, it is possible to form cavities within the composite fibers to thereby exhibit good drainage performance while maintaining sufficient durability.

Furthermore, the content ratio of the composite fibers to the space-introducing agent is not particularly limited, but from the viewpoint of achieving and improving both the wear resistance performance and on-ice performance, the mass ratio of the space-introducing agent to the composite fibers (space-introducing agent / composite fibers) is preferably 0.5 to 10, more preferably 1 to 8, even more preferably 1.5 to 7, and particularly more preferably 2 to 6.

### (Resin)

The rubber composition preferably further includes a resin, in addition to the above-described rubber component, and the fatty acid amide, filler, liquid polymer, space-inducing agent, foaming aid, and composite fibers as preferred components.

Since the resin is easily miscible with the rubber component, it can impart the flexibility to the tire required for grip performance on wet and icy and/or snowy surfaces, thereby improving the grip performance, i.e., on-ice performance, on icy and/or snowy surfaces.

Examples of the resin include C₅-based resins, C₅/C₉-based resins, C₉-based resins, terpene-based resins, dicyclopentadiene-based resins, and terpene-aromatic compound-based resins, and these resins can be used alone or in combination.

Examples of the C₅-based resins include, for example, aliphatic petroleum resins obtained by (co)polymerizing the C₅ fraction obtained by thermal cracking of naphtha in the petrochemical industry.

The C₅ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercially available products can be used as the C₅-based resin.

The C₅/C₉-based resins refer to C₅/C₉-based synthetic petroleum resins. Examples of these C₅/C₉-based resins include solid polymers obtained by polymerizing a petroleum-derived C₅/C₁₁ fraction using a Friedel-Crafts catalyst such as AlCl₃ or BF₃. More specifically, examples include a copolymer having, as the main component, styrene, vinyltoluene, α-methylstyrene, indene, and the like.

As the C₅/C₉-based resin, a resin with a small amount of C₉ or higher components is preferable in terms of compatibility with the rubber component. Here, including "with a small amount of C₉ or higher component" means that the amount of C₉ or higher component in the total amount of the resin is less than 50 mass%, preferably 40 mass% or less. A commercially available product can be used as the C₅/C₉-based resin.

The "C₉-based resins" refer to C₉-based synthetic petroleum resins, such as a solid polymer obtained by polymerizing a C₉ fraction using a Friedel-Crafts catalyst such as AlCl₃ or BF₃.

Examples of the C₉-based resin include copolymers including indene, α-methylstyrene, vinyltoluene, or the like as main components.

The terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resins include β-pinene resins and α-pinene resins. A typical example of the terpene-aromatic compound-based resin is a terpene-phenol resin. The terpene-phenol resin may be obtained by reacting terpenes and various phenols using a Friedel-Crafts catalyst or by further condensing the resultant with formalin. The terpenoid as raw material is not limited. The terpenoid is preferably monoterpene hydrocarbon such as α-pinene or limonene, more preferably contains α-pinene, and is particularly preferably α-pinene.

The dicyclopentadiene-based resin refers to, for example, resins obtained by polymerizing dicyclopentadiene using a Friedel-Crafts catalyst, such as AlCl₃ or BF₃, or the like.

Moreover, the resin may include, for example, a resin obtained by copolymerizing a C₅ fraction and dicyclopentadiene (DCPD) (C₅-DCPD-based resin).

Here, if the dicyclopentadiene-derived component accounts for 50 mass% or more of the total amount of the resin, the C₅-DCPD-based resin is classified as a dicyclopentadiene-based resin. If the dicyclopentadiene-derived component accounts for less than 50 mass% of the total amount of the resin, the C₅-DCPD-based resin is classified as a C₅-based resin. The same applies even if a small amount of a third component, etc. is included.

Here, the resin is preferably a hydrogenated resin. Here, the hydrogenated resin refers to a resin obtained by hydrogenating a resin. Examples of the resin that serves as the raw material for the hydrogenated resin include C₅-based resins, C₅/C₉-based resins, C₉-based resins, terpene-based resins, dicyclopentadiene-based resins, and terpene-aromatic compound-based resins, and these resins can be used alone or in combination.

From the viewpoint of improving compatibility between the rubber component and the resin and further improving the on-snow performance of the tire, the resin is preferably at least one selected from the group consisting of hydrogenated C₅-based resins, hydrogenated C₅/C₉-based resins, and hydrogenated dicyclopentadiene-based resins (hydrogenated DCPD-based resins), more preferably at least one selected from the group consisting of hydrogenated C₅-based resins and hydrogenated C₅/C₉-based resins, and even more preferably a hydrogenated C₅-based resin. Furthermore, it is preferable that the resin has a DCPD structure or a hydrogenated cyclic structure in at least monomers.

Moreover, the softening point of the hydrogenated resin is preferably higher than 110 °C. This is because if the softening point of the hydrogenated resin exceeds 110 °C, the rolling resistance of the tire can be sufficiently reduced. From the viewpoint of further lowering the rolling resistance of the tire, the softening point of the hydrogenated resin is preferably 115 °C or higher, more preferably 118 °C or higher, even more preferably 123 °C or higher, and still even more preferably 125 °C or higher. Additionally, from the viewpoint of further improving the wet grip performance and on-snow performance of the tire, the softening point of the hydrogenated resin is preferably 145 °C or lower, more preferably 138 °C or lower, and even more preferably 133 °C or lower.

Moreover, the polystyrene-equivalent weight average molecular weight of the hydrogenated resin is preferably from 200 to 1200 g/mol. This is because, when the polystyrene-equivalent weight average molecular weight of the hydrogenated resin is 200 g/mol or more, the precipitation of the hydrogenated resin from the tire can be suppressed, and when it is 1200 g/mol or less, the hydrogenated resin can be reliably miscible with the rubber component.

From the viewpoint of suppressing the precipitation of the hydrogenated resin from the tire and preventing a decline in the appearance of the tire, the polystyrene-equivalent weight average molecular weight of the hydrogenated resin is preferably 500 g/mol or more, more preferably 550 g/mol or more, even more preferably 620 g/mol or more, even more preferably 670 g/mol or more, even more preferably 720 g/mol or more, even more preferably 750 g/mol or more, and further preferably 780 g/mol or more. Furthermore, from the viewpoint of improving the compatibility of the hydrogenated resin with the rubber component and further enhancing the effect of the hydrogenated resin, the polystyrene-equivalent weight average molecular weight of the hydrogenated resin is preferably 1300 g/mol or less, more preferably 1100 g/mol or less, more preferably 1050 g/mol or less, more preferably 950 g/mol or less, more preferably 900 g/mol or less, and further preferably 850 g/mol or less.

Furthermore, it is preferable that the ratio of the softening point (Ts_{HR}) of the hydrogenated resin (unit: °C) to the polystyrene-equivalent weight average molecular weight (Mw_{HR}) of the hydrogenated resin (unit: g/mol) is 0.15 or more [0.15 ≤ (Ts_{HR}/Mw_{HR})].

From the viewpoint of further improving the wet grip performance and on-snow performance of the tire, the ratio (Ts_{HR}/Mw_{HR}) is preferably 0.155 or more, more preferably 0.158 or more, more preferably 0.160 or more, and further preferably 0.162 or more. Furthermore, from the viewpoint of suppressing the reduction in performance of the tire, the ratio (Ts_{HR}/Mw_{HR}) is preferably 0.2 or less, more preferably 0.185 or less, more preferably 0.178 or less, more preferably 0.172 or less, more preferably 0.168 or less, and further preferably 0.163 or less.

Preferably, the content of the resin in the rubber composition is 5 to 50 parts by mass per 100 parts by mass of the rubber component. When the content of the resin is 5 parts by mass or more per 100 parts by mass of the rubber component, it is possible to sufficiently manifest the effect by the resin. On the other hand, when it is 50 parts by mass or less per 100 parts by mass of the rubber component, it is possible to suppress the precipitation of the resin from the tire.

Furthermore, from the viewpoint of further enhancing the effect of the resin, the content of the resin in the rubber composition is preferably 7 parts by mass or more, and more preferably 9 parts by mass or more per 100 parts by mass of the rubber component. Additionally, from the viewpoint of suppressing the precipitation of the resin from the tire and preventing a decline in the appearance of the tire, the content of the resin in the rubber composition is preferably 40 parts by mass or less, more preferably 30 parts by mass or less, more preferably 25 parts by mass or less, and even more preferably 20 parts by mass or less, per 100 parts by mass of the rubber component.

### (Hydrocarbyl Group-Containing Cyclic Polyol Compound)

Furthermore, the rubber composition preferably further contains a hydrocarbyl group-containing cyclic polyol compound, in addition to the above-described rubber component, and the fatty acid amide, filler, liquid polymer, space-introducing agent, foaming aid, composite fibers, and hydrogenated resin as preferred components.

The hydrocarbyl group-containing cyclic polyol compound contained in the rubber composition can greatly improve the wear resistance performance and cut resistance of the vulcanized rubber composition for tires of the present disclosure. Moreover, by enhancing the interaction between the rubber molecules of the rubber component and the agent described later, it can homogenize the physical properties of the rubber after crosslinking, thereby improving reinforcing characteristic.

Additionally, it has been revealed that the rubber composition containing spaces of the present disclosure has further improved wear resistance performance and cut resistance.

Furthermore, since the hydrocarbyl group-containing cyclic polyol compound has fewer hydrophilic sites compared to compounds such as sorbitol, it can also suppress self-aggregation in the rubber composition, resulting in better maintenance of elongation fatigue resistance in the vulcanized rubber composition for tires.

Here, the content of the hydrocarbyl group-containing cyclic polyol compound is preferably 0.1 to 5 parts by mass per 100 parts by mass of the natural rubber. When the content of the hydrocarbyl group-containing cyclic polyol compound is 0.1 parts by mass or more per 100 parts by mass of the natural rubber, sufficient effect of improving wear resistance performance can be achieved. On the other hand, when the content of the hydrocarbyl group-containing cyclic polyol compound is 5 parts by mass or less per 100 parts by mass of the natural rubber, self-aggregation in the rubber composition can be reliably suppressed and the elongation fatigue resistance can be further improved.

From a similar viewpoint, the content of the hydrocarbyl group-containing cyclic polyol compound is preferably 0.1 to 3 parts by mass, more preferably 0.3 to 2.5 parts by mass per 100 parts by mass of the natural rubber.

Moreover, from the viewpoint of improving wear resistance performance and cut resistance, it is preferable that the hydrocarbyl group-containing cyclic polyol compound is dispersed in the rubber component, and it is more preferable that it is dispersed in the natural rubber.

The hydrocarbyl group-containing cyclic polyol compound does not act as a surfactant for other components, but rather it is dispersed in the rubber to improve wear resistance performance and cut resistance and is thus distinct from surfactants.

Here, the hydrocarbyl group-containing cyclic polyol compound contains preferably two or more hydroxyl groups, and more preferably three or more hydroxyl groups. This is because having a number of hydroxyl groups enhances the interaction between the rubber component and additives, achieving better wear resistance performance and cut resistance. On the other hand, from the viewpoint of suppressing self-aggregation in the rubber due to the increase in hydrophilic sites, the compound contains preferably five or fewer hydroxyl groups, and more preferably four or fewer hydroxyl groups.

Furthermore, it is preferable that the hydrocarbyl group-containing cyclic polyol compound is a cyclic polyol compound with a hydrocarbyl ester group. This is because it enables the realization of further excellent wear resistance performance and cut resistance.

Moreover, from the viewpoint of achieving further excellent wear resistance performance and cut resistance, the hydrocarbyl group-containing cyclic polyol compound is more preferably a compound represented by the following formula (1):

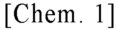

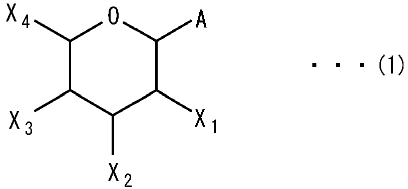

In the above formula (1), it is preferable that A represents a hydrocarbyl ester group having 6 to 30 carbon atoms or a hydrocarbyl ether group having 6 to 30 carbon atoms, and the hydrocarbyl group moiety of A has 12 to 24 carbon atoms. When the hydrocarbyl group moiety of A in the formula (1) has 12 to 24 carbon atoms, the wear resistance performance and cut resistance are further improved while good elongation fatigue resistance is maintained.

It is preferable that in formula (1), the first atom from the ring moiety (i.e., the atom bonded to the ring) or the second atom from the ring moiety is an oxygen atom. Examples of A where the first atom from the ring moiety is an oxygen atom include groups represented by -O-A' or -O-CO-A", and examples of A where the second atom from the ring moiety is an oxygen atom include groups represented by -CH₂-O-A" or -CH₂-O-CO-A"', where it is preferable that A' is a hydrocarbyl group having 6 to 30 carbon atoms, A" is a hydrocarbyl group having 5 to 29 carbon atoms, and A"' is a hydrocarbyl group having 4 to 28 carbon atoms, and it is more preferable that A', A", and A"' are hydrocarbyl groups having 12 to 24 carbon atoms.

In the above formula (1), X₁, X₂, X₃, and X₄ are each independently -OH or -R (where R is -H or -CH₂OH), with at least two of X₁, X₂, X₃, and X₄ being -OH. When preferably two or more of X₁, X₂, X₃, and X₄, more preferably three or more of X₁, X₂, X₃, and X₄ are -OH, the wear resistance performance and cut resistance of the rubber composition are further improved.

Furthermore, among the compounds represented by the above formula (1), compounds represented by the following formulae (2) or (3) are even more preferred, with compounds represented by formula (2) being particularly preferred.

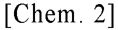

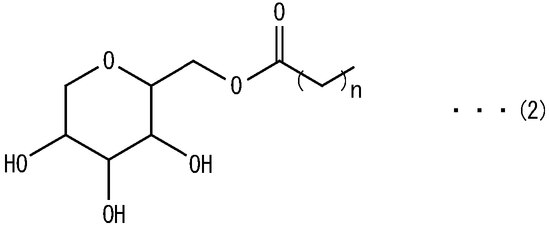

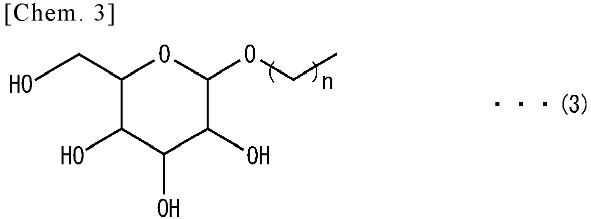

In formulae (2) and (3), n is a natural number and preferably ranges from 11 to 23.

By blending the compound represented by the above formula (2) or formula (3) as the modified cyclic polyol compound, the wear resistance performance can be further improved.

The hydrocarbyl group-containing cyclic polyol compound is not particularly limited but can be obtained, for example, by reacting polyol compounds such as sorbitol, sorbitan, glucose, or fructose, with aliphatic alcohols such as octanol, decanol, dodecanol, tetradecanol, or hexadecanol, or aliphatic carboxylic acids such as lauric acid, myristic acid, palmitic acid, stearic acid, or oleic acid.

Specifically, examples of the hydrocarbyl group-containing cyclic polyol compound include ester compounds such as sorbitan monolaurate, sorbitan monomyristate, sorbitan monopalmitate, sorbitan monostearate, or sorbitan monooleate, and ether compounds such as octyl-β-D-glucopyranoside, decyl-β-D-glucopyranoside, dodecyl-β-D-glucopyranoside, tetradecyl-β-D-glucopyranoside, or hexadecyl-β-D-glucopyranoside. These compounds may be used alone or in combination of two or more.

Among these compounds, from the viewpoint of balancing the elongation fatigue resistance and cut resistance at a higher level, it is preferable that the hydrocarbyl group-containing cyclic polyol compound is sorbitan monostearate (sorbitan monoester).

Furthermore, the melting point of the hydrocarbyl group-containing cyclic polyol compound is preferably 40 to 100 °C, more preferably 45 to 90 °C. This is because when the melting point of the hydrocarbyl group-containing cyclic polyol compound is 100 °C or lower, the solubility during kneading and vulcanization reactions can be improved, and when it is 40 °C or higher, cut resistance at high temperatures can be enhanced.

### (Other Components)

In addition to the aforementioned components, the rubber composition may also contain, as other components, components typically used in the rubber industry. For example, silane coupling agents, vulcanizing agents, vulcanization accelerators, polyethylene glycol, softeners, age-resistors, zinc oxide, etc., may be selected and included as appropriate as other components within the range in which the object of the present disclosure is not hampered. Commercial products are suitable for use as these compounding agents.

Moreover, when silica is included as a filler as described above, it is preferable to further include a silane coupling agent. This is because it can further enhance the cut resistance, reinforcing characteristic, and low-loss properties provided by the silica. As the silane coupling agent, known agents can be appropriately selected and used.

Examples of the silane coupling agent include, for example, bis(3-triethoxysilylpropyl) polysulfide, bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyl and tetrasulfide, dimethoxymethylsilylpropyl benzothiazolyl tetrasulfide. One kind of these silane coupling agents may be used alone, or two or more kinds may be used in combination.

Although the content of the silane coupling agent varies depending on the type of silane coupling agent, the content is preferably 0.2 or less, more preferably 0.1 or less, and even more preferably 0.09 or less, in terms of mass ratio relative to the content of silica. This is because by reducing the content of the silane coupling agent to 0.2 or less in terms of mass ratio relative to the content of silica, the cut resistance of the rubber composition can be further improved.

The type of the vulcanization accelerator is not particularly limited and conventionally known ones can be used. Examples include a sulfenamide-based vulcanization accelerator such as CBS (N-cyclohexyl-2-benzothiazolesulfenamide), TBBS (N-t-butyl-2-benzothiazolesulfenamide), TBSI (N-t-butyl-2-benzothiazolesulfenimide); a guanidine-based vulcanization accelerator such as DPG (diphenylguanidine); a thiuram-based vulcanization accelerator such as tetraoctylthiuram disulfide, tetrabenzylthiuram disulfide; zinc dialkyldithiophosphate; and the like. The content thereof is preferably less than the content of the sulfur and is more preferably about 1 to 10 parts by mass per 100 parts by mass of the rubber component.

Furthermore, to enhance the flexibility of the rubber and achieve better wet performance and on-ice performance, the rubber composition may also include a softener. The softener can be one that is conventionally known, and is not particularly limited. Examples include a petroleum softener such as an aroma oil, a paraffin oil, or a naphthene oil; and a plant-based softener such as a palm oil, a castor oil, a cottonseed oil, or a soybean oil. When used, one or two or more of these may be selected and used as appropriate. Note that the softener does not include the fatty acid amide mentioned above.

In the case of adding the softener, a softener that is liquid at a normal temperature of about 25 °C, such as petroleum softeners such as aromatic oil, paraffinic oil, and naphthenic oil, is preferably included in view of handling easiness, among the softeners described above.

The production method for the rubber composition is not limited. For example, it can be obtained by compounding and kneading the above-mentioned components using known methods.

### <Tire>

The tire of the present disclosure includes the vulcanized rubber composition for tires of the present disclosure described above used in the tread portion. By applying the rubber composition to the tread portion, excellent on-ice performance can be achieved.

The tire of the present disclosure can be used, for example, as a tire for construction vehicles, a tire for trucks and buses, a tire for aircraft, and a tire for passenger cars, and is particularly preferably a tire for passenger cars or a tire for trucks and buses. This is because the vulcanized rubber composition for tires used as the material of the tread portion is excellent in on-ice performance and wear resistance performance, making it highly beneficial when used as a tire for passenger cars or as a tire for trucks and buses.

When the above-described vulcanized rubber composition for tires of the present disclosure is used in the tread portion, the structure described in the following publications can be adopted as the structure of the tread:
JP 2016-203842A, JP 2009-196527A, JP 2000-225815A, JP 2000-264019A, JP 2003-211921 A, and WO 2014/196409.

The tire of the present disclosure has no particular limitations other than using the aforementioned vulcanized rubber composition for tires in the tread portion of the tire and can be manufactured according to commonly used methods. As a gas with which the tire is filled, an inert gas such as nitrogen, argon, or helium can be used as well as normal air or air whose oxygen partial pressure has been adjusted.

Note that the compounds described in this specification may be partially or entirely derived from fossil resources, biological resources such as plant resources, or recycled resources such as used tires. Additionally, they may be derived from a mixture of two or more of fossil resources, biological resources, and recycled resources.

### EXAMPLES

The present disclosure is described in more detail below with reference to Examples, by which the present disclosure is not intended to be limited in any way.

### (Production of Acrylic acid ester-Modified Polymer)

A diene-based polymer (A-1) which was an acrylic acid ester-modified polymer was prepared as described below. The acrylic acid ester-modified polymer prepared had an acrylic acid ester content of 4.0 mol% and a glass transition temperature of -76 °C.

To a reactor, 200 parts of ion-exchanged water, 4.5 parts of disproportionated potassium rosinate/sodium fatty acid, 0.1 parts of potassium chloride, 10 parts of methoxyethyl acrylate, and 0.3 parts of t-dodecyl mercaptan (molecular weight regulator) were charged in this order. The internal gases were replaced three times with nitrogen, and then 90 parts of 1,3-butadiene were charged. The reactor was maintained at 10 °C, 0.1 parts of diisopropylbenzene hydroperoxide (polymerization initiator), and appropriate amounts of a reducing agent and a chelating agent were charged, and the polymerization reaction was initiated with stirring. The polymerization reaction was continued while stirring, and when the polymerization conversion rate reached 75%, 0.2 parts of diethylhydroxylamine (polymerization terminator) were added to stop the polymerization reaction. After the polymerization reaction was stopped, the residual monomer was removed under reduced pressure at a water temperature of 60 °C. Then, 0.5 parts of alkylated phenol as an age resistor were added, and the obtained polymer latex was charged into an aqueous calcium chloride solution to achieve coagulation, yielding a crumb-like polymer. The crumb-like polymer was then taken out, washed with water, and dried under reduced pressure at 60 °C to obtain a diene-based polymer (A-1).

The obtained diene-based polymer (A-1) contained 91 weight% (96.0 mol%) of 1,3-butadiene units and 9 weight% (4.0 mol%) of methoxyethyl acrylate units, and had a vinyl bond content in the 1,3-butadiene units of 16 mol%, a Mooney viscosity (ML1+4) of 55, and a glass transition temperature (Tg) of -76 °C.

### <Examples 1 to 2 and Comparative Examples 1 to 3>

Samples of the rubber composition were prepared by compounding and kneading according to the formulations summarized in Tables 1 and 2 by a commonly used method.

The obtained samples were subjected to vulcanization treatment to produce samples of the vulcanized rubber composition for tires, and the following evaluations (1) to (3) were conducted.

### <Evaluations>

### (1) Foaming Ratio (Porosity) of Vulcanized Rubber

Each sample of the vulcanized rubber composition for tires was cut at arbitrary points, and the weight of each sample was measured using a precision balance for each sample of the vulcanized rubber composition for tires. The difference from the theoretical weight was calculated as the foaming ratio (porosity) (%) by the formula: ((theoretical specific gravity/measured specific gravity - 1) × 100). The obtained foaming ratios are summarized in Tables 1 and 2.

### (2) On-ice Performance of Vulcanized Rubber

Each sample of the vulcanized rubber composition for tires was molded into a test piece with a diameter of 50 mm and a thickness of 10 mm, the friction force generated when pressed against and rotated on a fixed ice surface was detected by a load cell, and the dynamic friction coefficient µ was calculated. The measurement temperature was -2 °C, the surface pressure was 12 kgf/cm², and the sample rotation circumferential speed was 20 cm/sec.

The evaluation results were expressed as indices with the coefficient of dynamic friction µ of Comparative Example 1 being 100 in Table 1, or with the coefficient of dynamic friction µ of Comparative Example 2 being 100 in Table 2. A larger index value represents a greater dynamic friction coefficient µ, which means that the sample is excellent in on-ice performance.

### (3) Wear Resistance Performance of Vulcanized Rubber

The wear amount was measured according to Method B of the testing for sliding wear resistance in JIS K 7218: 1986 for each sample of the vulcanized rubber composition for tires. The measurement temperature was room temperature (23 °C), and the load was 16 N.

Each evaluation is expressed in Table 1 as an index with the wear amount of the vulcanized rubber of Comparative Example 1 being 100. A larger index value represents a smaller wear amount, which means that the sample is excellent in wear resistance performance.

**[Table 1]**

| | | Comp. Ex. 1 | Example 1 |
|---|---|---|---|
| | Natural rubber | 50 | 50 |
| | Modified SBR *1 | 20 | - |
| | Butadiene rubber *2 | 30.0 | 30 |
| | Acrylic acid ester-modified polymer | - | 20.0 |
| | Carbon Black *3 | 35 | 35 |
| | Silica*4 | 35 | 35 |
| Formulation | Silane coupling agent *5 | 2.8 | 2.8 |
| | Liquid BR *8 | 10 | 10 |
| | Foaming agent *6 | 4.5 | 4.5 |
| | Short fibers *7 | 2.0 | 2.0 |
| | Age resistor | 2.0 | 2.0 |
| | Sulfur | 1.0 | 1.0 |
| | Vulcanization accelerator | 2 in total | 2 in total |
| Evaluation | Foaming ratio | 26% | 19% |
| | On-ice performance | 100 | 115 |
| | Wear resistance performance | 100 | 99 |

**[Table 2]**

| | | Comp. Ex. 2 | Comp. Ex. 3 | Example 2 |
|---|---|---|---|---|
| | Natural rubber | 50 | 50 | 50 |
| | Modified SBR *1 | 20 | 20 | 20 |
| | Butadiene rubber *2 | 30.0 | 30 | - |
| | Acrylic acid ester-modified polymer | - | - | 30.0 |
| | Carbon Black *3 | 35 | 35 | 35 |
| | Silica*4 | 35 | 35 | 35 |
| Formulation | Silane coupling agent *5 | 2.8 | 2.8 | 2.8 |
| | Liquid BR *8 | 10 | 10 | 10 |
| | Foaming agent *6 | 5.6 | - | - |
| | Foaming agent (sodium bicarbonate + urea) | - | 7.5 | 7.5 |
| | Short fibers *7 | 2.0 | 2.0 | 2.0 |
| | Age resistor | 2.0 | 2.0 | 2.0 |
| | Sulfur | 2.0 | 2.0 | 2.0 |
| | Vulcanization accelerator | 2 in total | 1.4 in total | 1.4 in total |
| Evaluation | Foaming ratio | 26% | 27% | 26% |
| | On-ice performance | 100 | 105 | 109 |

| | | | | |
|---|---|---|---|---|
| *1 Modified styrene-butadiene rubber: N,N-bis-(trimethylsilyl)-aminopropylmethyldiethoxysilane-modified SBR *2 Butadiene rubber: "UBEPOL BR150L", manufactured by Ube Industries, Ltd. *3 Carbon black: SAF-grade carbon black *4 Silica: product name "Nipsil AQ", manufactured by Tosoh Silica Corporation *5 Silane coupling agent: bis(3-triethoxysilylpropyl) polysulfide, manufactured by Shin-Etsu Chemical Co., Ltd. *6 Foaming agent: dinitrosopentamethylenetetramine, "Cellular Z-K", manufactured by Eiwa Chemical Co., Ltd. *7 Short fibers: hydrophilic short fibers produced by the following method. | | | | |

In accordance with Production Example 3 disclosed in JP 2012-219245 A, two twin-screw extruders were used, where 40 parts by mass of polyethylene [Novatec HJ360, manufactured by Japan Polyethylene Corporation (MFR: 5.5, melting point: 132 °C)] and 40 parts by mass of an ethylene-vinyl alcohol copolymer [EVAL F104B manufactured by Kuraray Co., Ltd. (MFR: 4.4, melting point: 183 °C)] were fed into hoppers and extruded simultaneously from each die outlet. Fibers obtained according to a commonly used method were cut into a length of 2 mm to produce hydrophilic short fibers in which a coating layer made of polyethylene was formed on the surface of a core made of the ethylene-vinyl alcohol copolymer.
*8 Liquid BR: a liquid BR manufactured by Kuraray Co., Ltd., with a molecular weight of 7,000 and a vinyl content of 45 to 55%

Resins, oils, stearic acid, and zinc oxide were included in the same amounts in each example and comparative example, besides the compounding ingredients described in Table 1.

It can be understood from the results in Table 1 that the vulcanized rubber composition for tires in Example 1 achieved both wear resistance performance and on-ice performance at a higher level compared to Comparative Example 1.

It can be understood from the results in Table 2 that the vulcanized rubber composition for tires in Example 2 exhibited on-ice performance superior to that of Comparative Example 1.

### INDUSTRIAL APPLICABILITY

According to the present disclosure, a vulcanized rubber composition for tires with excellent on-ice performance can be provided. In addition, according to the present disclosure, a tire with excellent on-ice performance can be provided.

### REFERENCE SIGNS LIST

- 10: Vulcanized rubber composition for tires
- 20: Space

## Claims

1. A vulcanized rubber composition for tires being a vulcanized product of a rubber composition comprising a rubber component that contains a modified conjugated diene-based polymer having a (meth)acrylic acid ester in a molecule thereof,
the vulcanized rubber composition for tires comprising a plurality of spaces.

2. The vulcanized rubber composition for tires according to claim 1, wherein a content of the (meth)acrylic acid ester in the modified conjugated diene-based polymer is 0.5 to 10 mol%.

3. The vulcanized rubber composition for tires according to claim 1 or 2, wherein the (meth)acrylic acid ester is a (meth)acrylic acid alkoxyalkyl ester.

4. The vulcanized rubber composition for tires according to claim 1 or 2, wherein a glass transition temperature of the modified conjugated diene-based polymer is -100 to -50°C.

5. The vulcanized rubber composition for tires according to claim 1 or 2, wherein the modified conjugated diene-based polymer contains 1,3-butadiene units, and a vinyl bound content in the 1,3-butadiene units is 13 to 18 mol%.

6. The vulcanized rubber composition for tires according to claim 1 or 2, wherein a content ratio of the modified conjugated diene-based polymer in the rubber component is 5 to 50 mass%.

7. The vulcanized rubber composition for tires according to claim 1 or 2, wherein the rubber composition further contains a liquid polymer having a bound styrene content of less than 10% and a vinyl bond content of conjugated diene units of 20% or more, and a polystyrene-equivalent weight average molecular weight of less than 40,000 as measured by gel permeation chromatography.

8. The vulcanized rubber composition for tires according to claim 7, wherein the vinyl bond content of the conjugated diene units of the liquid polymer is 45% or more and 55% or less.

9. The vulcanized rubber composition for tires according to claim 7, wherein the liquid polymer is an unmodified polybutadiene.

10. The vulcanized rubber composition for tires according to claim 7, wherein a content ratio of the liquid polymer is 1 to 40 mass%.

11. The vulcanized rubber composition for tires according to claim 7, wherein a mass ratio of a content of the modified conjugated diene-based polymer to a content of the liquid polymer (the content of the modified conjugated diene-based polymer / the content of the liquid polymer) is 0.5 to 5.

12. The vulcanized rubber composition for tires according to claim 1 or 2, wherein the rubber composition further comprises a space-introducing agent.

13. The vulcanized rubber composition for tires according to claim 1 or 2, wherein the rubber composition further comprises composite fibers.

14. The vulcanized rubber composition for tires according to claim 1 or 2, wherein the vulcanized rubber composition for tires has a porosity of 5 to 45%.

15. The vulcanized rubber composition for tires according to claim 1 or 2, wherein the rubber component contains natural rubber, and an unmodified butadiene rubber having a polystyrene-equivalent weight average molecular weight of 40,000 or more as measured by gel permeation chromatography or an unmodified styrene-butadiene rubber having a polystyrene-equivalent weight average molecular weight of 40,000 or more as measured by gel permeation chromatography.

16. The vulcanized rubber composition for tires according to claim 15, wherein a content ratio of the natural rubber in the rubber component is 30 to 70 mass%.

17. The vulcanized rubber composition for tires according to claim 15, wherein a content ratio of the unmodified butadiene rubber or the unmodified styrene-butadiene rubber in the rubber component is 15 to 45 mass%.

18. The vulcanized rubber composition for tires according to claim 1 or 2, wherein the rubber composition further comprises a fatty acid amide.

19. The vulcanized rubber composition for tires according to claim 18, 0.1 to 10 parts by mass of the fatty acid amide is contained per 100 parts by mass of the rubber component.

20. The vulcanized rubber composition for tires according to claim 19, wherein the fatty acid amide is a fatty acid bisamide.

21. The vulcanized rubber composition for tires according to claim 20, wherein the fatty acid bisamide is an ethylene bis fatty acid amide.

22. A tire comprising the vulcanized rubber composition for tires according to claim 1 or 2 used in a tread.
